# EUROPÄISCHE PATENTANMELDUNG

(11) **EP 2 386 952 A1**
(43) Veröffentlichungstag der Anmeldung: **16.11.2011**
(21) Anmeldenummer: 10005034.3
(22) Anmeldetag: 12.05.2010
(51) Int. Cl.: G06F 11/36

(54) **Verfahren und Entwicklungsumgebung zur Überwachung eines ablaufenden Programms**

(71) Anmelder: Siemens Aktiengesellschaft, 80333 München (DE)
(72) Erfinder: Opaterny, Thilo, 90453 Nürnberg (DE)

(57) **Zusammenfassung**

Die Erfindung betrifft ein Verfahren und eine Entwicklungsumgebung zur Überwachung eines ablaufenden Programms (P) einer Zielplattform (ZP) durch ein Diagnoseprogramm (DS) einer Diagnoseplattform (ES), wobei die Zielplattform (ZP) und die Diagnoseplattform (ES) über Kommunikationsmittel verknüpft sind. Dabei wird in das Programm (P) mit zumindest einem Überprüfungspunkt versehen, wobei zuerst eine Auslösebedingung für ein durch das Diagnoseprogramm (DS) zu untersuchendes Ereignis definiert wird, danach eine für die Überprüfung der Auslösebedingung ausgestaltete und auf der Zielplattform (ZP) ablauffähige Routine (AR) von der Diagnoseplattform (ES) in einen Programmspeicher der Zielplattform (ZP) übertragen wird. Immer dann, wenn der Ablauf des zu überwachenden Programms (P) den Überprüfungspunkt erreicht, wird die Ausführung dieses Programms (P) unterbrochen. Dabei wird durch eine Verarbeitungseinheit der Zielplattform (ZP) die Routine (AR) ausgeführt und das Vorliegen der Auslösebedingung überprüft, wobei in dem Fall, in dem die Auslösebedingung nicht erfüllt ist, die Ausführung des unterbrochenen Programms (P) unmittelbar fortgesetzt wird, und anderenfalls zumindest eine Meldung zu dem Diagnoseprogramm (DS) übertragen wird. Dadurch kann die Auslösebedingung seitens der Zielplattform (ZP) überprüft werden, was zumindest in den Fällen, in denen diese nicht erfüllt ist, die Programmausführung gegenüber dem Stand der Technik beschleunigt wird.

## Beschreibung

Die Erfindung betrifft ein Verfahren zur Überwachung eines ablaufenden Programms einer Zielplattform gemäß dem Oberbegriff des Patentanspruchs 1, und eine Entwicklungsumgebung für die Erstellung und die Überwachung eines Programms für eine Zielplattform gemäß dem Oberbegriff des Patentanspruchs 10.

Programme für Computer und andere datentechnische Geräte und Anlagen werden in der Regel in einer Programmiersprache (Hochsprache) erstellt und danach mittels eines Compilers oder eines Interpreters in ein ablauffähiges Programm (Maschinencode, Object-Code o.ä.) übersetzt. Während die in der Hochsprache verfassten Computerprogramme durch ein verwendetes Entwicklungssystem bereits während oder nach dem Schreiben recht gut hinsichtlich syntaktischer Fehler untersucht werden können, treten strukturelle oder logische Unzulänglichkeiten und Fehler oft erst während eines Programmablaufs zu Tage.

Zur Fehlersuche stehen in den gebräuchlichen Entwicklungsumgebungen verschiedene Mittel zur Verfügung. Diese sind häufig unter dem Sammelbegriff "Debugger" bekannt. Im Folgenden werden solche "Debugger" betrachtet, die zur Laufzeit eines zu untersuchenden Programms Analysen erstellen und Ereignisse transparent machen. Bekannte Hilfsmittel sind dabei Beobachtungstabellen ("Watch Table"), Haltepunkte ("Break Points") und Einzelschrittausführung ("Single Step"), Programmaufzeichnungen ("Tracing") sowie Aufzeichnungsstatistiken ("Profiling").

Dabei liefern die Beobachtungstabellen ("Watch Tables") einmalig Werte von Variablen, also von Datenadressen. Der Anwender kann die zu beobachten Variablen in mindestens einem Fenster angeben. In diesem Fenster werden dann auch die Werte dargestellt. Haltepunkte ("Break Points") unterbrechen den Programmablauf. Sie gehören allgemein zu den "Überprüfungspunkten". Dabei ergibt sich einem Anwender die Möglichkeit, mittels der Beobachtungstabellen die Werte von Variablen an einer bestimmten Stelle (Code-Adresse, Programm-Adresse) im Programm zu untersuchen, nämlich an der Stelle des Haltepunktes. In diesem Zusammenhang ermöglicht die Einzelschrittausführung ("Single Step") dem Anwender von diesem gegebenen Haltepunkt aus eine Weiterführung des Programms Schritt-für-Schritt. Bei einer Programmaufzeichnung ("Tracing") werden Haltepunkte mit Beobachtungstabellen kombiniert. Die Programmausführung wird - im Gegensatz zum Haltepunkt - nicht unterbrochen, die Aufzeichnung kann nahezu simultan oder zu einem späteren Zeitpunkt betrachtet werden. Aufzeichnungsstatistiken ("Profiling") dagegen liefern Aussagen darüber, wie oft bestimmte Funktionen, "Statements" etc. in einem bestimmten Zeitraum durchlaufen werden. Dadurch lassen sich Rückschlüsse auf verschiedene Programmlaufzeiten ziehen.

Alle diese Werkzeuge verwenden Auslöser ("Trigger"), die eine Auslösebedingung ("Trigger Condition") definieren, die bestimmt, wann bzw. in welchem Fall eine Aktion durchzuführen ist, und wann nicht. Der Auslöser eines Haltepunktes ist das Erreichen einer bestimmten Instruktion, also beispielsweise eines Programmbefehls oder "Statements". In den Fällen, in denen eine Funktion, ein Baustein oder eine ähnliche Programmstruktur in einem Programm mehrfach verwendet bzw. durchlaufen wird, ist es häufig unpraktikabel, wenn bei jedem Durchlauf der entsprechenden Anweisung, also bei jedem Erreichen dieses Haltepunktes, eine Aktion oder eine Aktions-Kette zur Fehleranalyse o.ä. durchlaufen wird. Ein Anwender hat daher gemeinhin die Möglichkeit, Auslösebedingungen zu definieren, die erfüllt sein müssen, um den Programmablauf zu unterbrechen und eine Analyse o.ä. auszulösen. Bei den gebräuchlichen "Debuggern" wird daher an einer interessierenden Stelle des zu überprüfenden Programms ein Überprüfungspunkt, z.B. Haltepunkt ("Break Point"), eingesetzt, der dafür sorgt, dass bei Erreichen dieser Stelle im Programmablauf ein sog. "Interrupt" ausgelöst wird. Dieser "Interrupt" sorgt dafür, dass das Programm kurzzeitig angehalten wird und eine Meldung an den "Debugger" versendet wird. Der "Debugger" überprüft danach, ob eine Auslösebedingung erfüllt ist, wobei der Debugger alle diejenigen Variablen, Inhalte, Informationen (beispielsweise Aufrufpfade von Funktionen) etc. und andere Daten abruft, die für die Entscheidungsfindung hinsichtlich der Auslösebedingung benötigt werden. In den Fällen, in denen die Auslösebedingung nicht erfüllt ist, gibt der Debugger die weitere Ausführung des zu untersuchenden Programms frei. Falls jedoch die Auslösebedingung erfüllt ist, bleibt der Programmablauf so lange unterbrochen, bis vorgesehene Maßnahmen zur Analyse etc. beendet sind.

Bei gebräuchlichen Programmen für Personal-Computer und ähnliche Geräte laufen sowohl das zu untersuchende Programm als auch die benutzte Entwicklungsumgebung regelmäßig auf derselben Hardware-Plattform, dem sog. "Zielsystem". Dies bedeutet, dass zum Programmtest (Debugging) des Programms das Diagnoseprogramm (Debugger) innerhalb der Entwicklungsumgebung oder zumindest auf demselben "Rechner" zur Ausführung gebracht wird. Die Kommunikation zwischen der Entwicklungsumgebung mit dem "Debugger" und dem zu untersuchenden Programm bzw. den von dem zu untersuchenden Programm verwendeten Registern, Variablen etc. erfolgt also innerhalb einer geschlossenen Hardware-Struktur und ist dabei vergleichsweise schnell, weil beispielsweise ein "Debugger" direkten Zugriff auf Register, Programmspeicher, Variablenspeicher etc. nehmen kann.

Bei der Entwicklung von Programmen für speicherprogrammierbare Steuerungen, Mikrocontroller, Signalprozessoren, mikroprozessorgesteuerte Geräte (sog. "Embedded-Systemen") etc. besteht die Möglichkeit des direkten Zugriffs in der Regel nicht, weil bei solchen Architekturen die Entwicklungsumgebung und damit das Diagnoseprogramm ("Debugger") und das zu untersuchende Programm auf unterschiedlichen Systemen zum Ablauf gebracht werden. Dabei stellt z.B. eine speicherprogrammierbare Steuerung dem Programm eine Ablaufumgebung zur Verfügung, wobei innerhalb dieser Ablaufumgebung auch die Vorkehrungen realisiert werden müssen, die zur Realisierung der oben erwähnten "Werkzeuge" auf dem Zielsystem notwendig sind. Bei Erreichen eines Haltepunkts oder eines ähnlichen Ereignisses wird auch bei den genannten speicherprogrammierbaren Steuerungen und ähnlichen Systemen der Programmablauf gestoppt, danach wird jedoch über eine Netzwerkverbindung oder eine ähnliche vergleichsweise langsame Verbindung ein Dialog mit dem externen Debugger durchgeführt. Dies führt dazu, dass auch in den Fällen, in denen ein Haltepunkt o.ä. erreicht wird und dabei keine Auslösebedingung erfüllt ist, der Programmablauf stark verlangsamt wird, weil das Vorliegen einer Auslösebedingung seitens des Debuggers entschieden wird, was erfordert, dass die erforderlichen Informationen (beispielsweise zu überprüfende Variableninhalte etc.) auch bei jedem Erreichen eines Haltepunkts oder eines anderen Überprüfungspunktes zu der Hardware-Plattform des Debuggers übertragen werden müssen.

Eine Möglichkeit zur Lösung des Problems wäre die Installation des Debuggers auf der "Zielplattform", wie es bei PCbasierten Programmen oft der Fall ist. Dem steht jedoch entgegen, dass die genannten speicherprogrammierbaren Steuerungen, Embedded-Systeme o.ä. hinsichtlich ihrer Architektur, ihres Speicherplatzes, ihrer Rechenkapazität usw. oft nicht für die zusätzliche Installation eines Debuggers ausgelegt sind. Darüber hinaus ist es bei solchen Systemen oft wichtig, die Überprüfung eines Programms unter möglichst realitätsnahen Bedingungen durchzuführen, was bei der zusätzlichen Installation eines Debuggers nicht gelingen kann.

Es ist zur Lösung des Problems weiterhin bekannt, die Überprüfung des Vorliegens einer Auslösebedingung durch die Firmware oder durch ein Betriebssystem einer speicherprogrammierbaren Steuerung o.ä. durchführen zu lassen. Dabei wird bei einem Überprüfungspunkt ein Software-Interrupt ausgelöst, der den Aufruf einer entsprechenden Routine in der Firmware oder in dem Betriebssystem der betreffenden Komponente bewirkt, wo entschieden wird, ob die Auslösebedingung erfüllt ist, so dass die Programmausführung entweder unverzüglich fortgesetzt wird (nämlich bei Nicht-Vorliegen der Auslösebedingung), oder anderenfalls die Kontrolle an einen externen Debugger übergeben wird.

Obwohl sich durch dieses Verfahren der Programmablauf zumindest in den Fällen, in denen eine Auslösebedingung nicht erfüllt ist, wesentlich beschleunigt, tritt hierbei der Nachteil auf, dass die Auslösebedingung bereits in der Firmware bzw. dem Betriebssystem definiert sein muss, d.h., dass derjenige Programmcode, der in der Firmware oder dem Betriebssystem die Überprüfung des Vorliegens der Auslösebedingung vornimmt, festgelegt ist. Eine Änderung der Auslösebedingung, also bei einer Änderung der Kriterien, die bei Erreichen eines Überprüfungspunktes überprüft werden sollen, erfordert bei den betrachteten speicherprogrammierbaren Steuerungen, Embedded-Sytemen etc. eine Änderung der fest programmierten Firmware oder zumindest des Betriebssystems. Dies bedeutet, dass solche Änderungen nur schwer und nach der Installation des zu überprüfenden Programms überhaupt nicht nachträglich einzubringen sind. Dazu ist beispielsweise bei sicherheitsrelevanten Steuerungen etc. die Firmware oft zertifiziert, und somit erfordert jede Änderung der Auslösebedingungen eine neue Zertifizierung der Firmware.

Es ist also eine Aufgabe der vorliegenden Erfindung, bei der Fehlersuche an Programmen für speicherprogrammierbare Steuerungen und ähnliche "Systeme" eine schnelle und flexible Handhabung von Auslösebedingungen für Überprüfungspunkte zu ermöglichen.

Es ist ein zentraler erfindungsgemäßer Gedanke der Lösung der Aufgabe, dass Auslösebedingungen wie Funktionsaufrufe ("calls") evaluiert werden. Dadurch ist es möglich, dass neue oder geänderte Auslösebedingungen in der Entwicklungsumgebung definiert und realisiert werden, ohne das Laufzeitsystem (Programm, Betriebssystem und Firmware des Zielsystems) erweitern zu müssen. Dabei ist es ein Grundgedanke der Erfindung, dass eine Auslösebedingung bzw. eine Routine zur Überprüfung der Auslösebedingung eine Funktion ist, die eine Bool'sche Rückgabe (wahr, falsch - "true" - "false") hat. Da viele speicherprogrammierbare Steuerungen es ermöglichen, Software-Bausteine und damit Funktionen zur Laufzeit auszutauschen, können somit auch Routinen zur Überprüfung von Auslösebedingungen jederzeit und auch nachträglich, also auch nach Installation des zu überprüfenden Programms, geändert und ausgetauscht werden.

Die Aufgabe wird insbesondere mit einem Verfahren gemäß dem Patentanspruch 1 gelöst. Dabei ist vorgesehen, dass für ein Verfahren zur Überwachung eines ablaufenden Programms einer Zielplattform durch ein Diagnoseprogramm einer Diagnoseplattform die Zielplattform und die Diagnoseplattform über Kommunikationsmittel bzw. eine Kommunikationsverbindung (z.B. Datenkanal) verknüpft sind. Ein Überwachungsauftrag wird von dem Diagnoseprogramm zu der Zielplattform übermittelt, wobei das Programm mit zumindest einem Überprüfungspunkt versehen wird. Dabei wird erfindungsgemäß in einem ersten Schritt eine Auslösebedingung für ein durch das Diagnoseprogramm zu untersuchendes Ereignis definiert, wonach in einem zweiten Schritt eine für die Überprüfung der Auslösebedingung ausgestaltete und auf der Zielplattform ablauffähige Routine von der Diagnoseplattform in einen Programmspeicher der Zielplattform übertragen wird. Während eines Ablauf des zu überwachenden Programms wird bei jedem Erreichen eines zugeordneten Überprüfungspunktes die Ausführung dieses Programms unterbrochen und auf der Zielplattform die Routine ausgeführt und dabei das Vorliegen der Auslösebedingung überprüft. In den Fällen, in denen die Auslösebedingung nicht erfüllt ist, wird die Ausführung des unterbrochenen Programms unmittelbar, also vorzugsweise ohne eine Übergabe der Kontrolle an das Diagnoseprogramm, fortgesetzt, während in den Fällen, in denen die Auslösebedingung erfüllt ist, zumindest eine Meldung zu dem Diagnoseprogramm übertragen wird. Durch dieses Verfahren ist es möglich, das Vorliegen der Auslösebedingung auch bei speicherprogrammierbaren Steuerungen, Embedded-Systems und dgl. seitens der Zielplattform zu überprüfen, wobei dies mittels einer Routine geschieht, welche separat zu der Zielplattform übertragbar ist. Dadurch kann die Auslösebedingung definiert und geändert werden, ohne das Programm, die Firmware oder das Betriebssystem der Zielplattform zu ändern.

Die Aufgabe wird außerdem durch eine Entwicklungsumgebung gemäß dem Patentanspruch 10 gelöst, wobei die Entwicklungsumgebung für die Erstellung und die Überwachung eines Programms für eine Zielplattform eingerichtet ist, und wobei die Entwicklungsumgebung auf einer über Kommunikationsmittel mit der Zielplattform verbundenen getrennten Diagnoseplattform installiert ist, wobei ein Diagnoseprogramm der Entwicklungsumgebung zur Erstellung eines Überwachungsauftrages eingerichtet ist, und wobei das Programm, welches zum Ablauf auf der Zielplattform bestimmt ist, mit zumindest einem Überprüfungspunkt versehbar ist. Dabei ist die Entwicklungsumgebung zur Erstellung einer Routine für die Überprüfung des Vorliegens einer Auslösebedingung und für die Übertragung dieser Routine zu der Zielplattform eingerichtet, und die Entwicklungsumgebung ist zur Verknüpfung des zumindest einen Überprüfungspunktes mit der Routine seines der Zielplattform eingerichtet. Dabei ist die Routine unabhängig von dem Programm erstellbar und zu der Zielpattform übertragbar und darüber hinaus derart ausgestaltet, dass eine Übertragung von Kontrollinformationen von der Zielplattform zu der Entwicklungsumgebung im Zusammenhang mit dem Ereignis, dass der Programmablauf einen Überprüfungspunkt erreicht, nur in den Fällen erfolgt, in denen eine durch die Routine definierte Auslösebedingung erfüllt ist bzw. vorliegt. Mit einer solchen Entwicklungsumgebung lassen sich die Vorteile des erfindungsgemäßen Verfahrens realisieren.

Vorteilhafte Ausgestaltungen des erfindungsgemäßen Verfahrens sind in den abhängigen Patentansprüchen angegeben. Die dabei beschriebenen Merkmale und Vorteile gelten sinngemäß auch für die erfindungsgemäße Entwicklungsumgebung.

Ein vorteilhafter Anwendungsfall ist gegeben, wenn die Zielplattform eine speicherprogrammierbare Steuerung einer industriellen Automatisierungsanordnung ist. Gerade bei den speicherprogrammierbaren Steuerungen kommt es darauf an, während des Systemstests bzw. der Überprüfung eines Programms möglichst wenige Änderungen an einer Zielplattform vorzunehmen, durch die die Konfiguration vom späteren Produktivbetrieb abweicht. Erfindungsgemäß kann die Auslösebedingung ohne Beeinflussung einer Firmware oder eines Betriebssystems der Zielplattform übermittelt und geändert werden, und darüber hinaus kann für die Durchführung des erfindungsgemäßen Verfahrens bei den speicherprogrammierbaren Steuerungen auf die Installation eines Diagnoseprogramms (Debuggers) seitens der Zielplattform verzichtet werden. Außerdem kann das Programm einer speicherprogrammierbaren Steuerung zumindest in den Fällen, in denen eine Auslösebedingung nicht erfüllt ist, nahezu ohne Einbuße an Ausführungsgeschwindigkeit ablaufen, so dass ein Programmtest im realen Einsatz oder unter realen Bedingungen möglich ist.

Eine integrierte Lösung ergibt sich, wenn als das Diagnoseprogramm ein Entwicklungssystem für speicherprogrammierbare Steuerungen verwendet wird bzw. ein solches Entwicklungssystem das Diagnoseprogramm umfasst. In einem solchen Fall kann mittels aus dem Stand der Technik bekannter Verfahren auch das Setzen oder Löschen von Überprüfungspunkten veranlasst werden, wobei sich umgekehrt auch in den Fällen, in denen die Auslösebedingung erfüllt ist, wie bei den bekannten "Debuggern" eine Anzeige des entsprechenden Teiles des Quellcodes des Programms vornehmen lässt.

In einer vorteilhaften Ausgestaltung werden Parameter und/oder Eigenschaften der Auslösebedingung mittels eines graphischen Editors definiert und danach durch einen Programmgenerator automatisch in die ablauffähige Routine umgesetzt. Damit ist die Erstellung der Routine besonders einfach und komfortabel möglich.

Nachträgliche Änderungen der Auslösebedingung lassen sich umsetzen, wenn die Routine getrennt von dem Programm und auch nach dem Laden oder Installieren des Programms auf die Zielplattform übertragbar ist.

Eine gebräuchliche Anwendung wird möglich, wenn als der Überprüfungspunkt ein Haltepunkt verwendet wird, wobei an dem Haltepunkt der Ablauf des Programms unterbrochen und mittelbar oder unmittelbar die Routine aufgerufen wird, bzw. eine Verarbeitungseinheit der Zielplattform in die Routine "einspringt". Dabei kann in vorteilhaften Ausgestaltungen die Routine auch Aufrufe von Funktionen und Methoden einer Firmware und/oder eines Betriebssystems der Zielplattform vornehmen, wobei in einer weiteren vorteilhaften Ausgestaltung die Firmware oder das Betriebssystem Methoden für den lesenden Zugriff auf einen Programmstapel ("Stack") der Zielplattform aufweist. In diesem Fall ist es möglich, die Auslösebedingungen von Zuständen des Programmstapels, beispielsweise Aufrufpfaden etc., abhängig zu machen bzw. solche darin zu integrieren.

Das erfindungsgemäße Verfahren lässt sich besonders vorteilhaft auch mit einer sog. Web-basierten Diagnose verbinden, wobei das Diagnoseprogramm als eine Art Anwendung in einem Browser der Diagnoseplattform abläuft und somit auf einer fast beliebigen Standard-Plattform in einem lokalen Netzwerk oder sogar im Internet betrieben werden kann. Dies setzt voraus, dass die Zielplattform einen Web-Server zur Kommunikation zwischen der Routine und dem Diagnoseprogramm und zur Bereitstellung einer geeigneten Web-Site aufweist.

Ein Ausführungsbeispiel des erfindungsgemäßen Verfahrens wird nachfolgend anhand der Zeichnungen erläutert. Es dient gleichzeitig der Erläuterung einer erfindungsgemäßen Entwicklungsumgebung bzw. Entwicklungs-Systems.

Dabei zeigen:
- Figur 1: in einer schematischen Darstellung eine Anordnung aus der Zielplattform und der Diagnoseplattform, und
- Figur 2: einen Pseudocode eines Programmierbeispiels für eine Routine zur Überprüfung der Auslösebedingung.

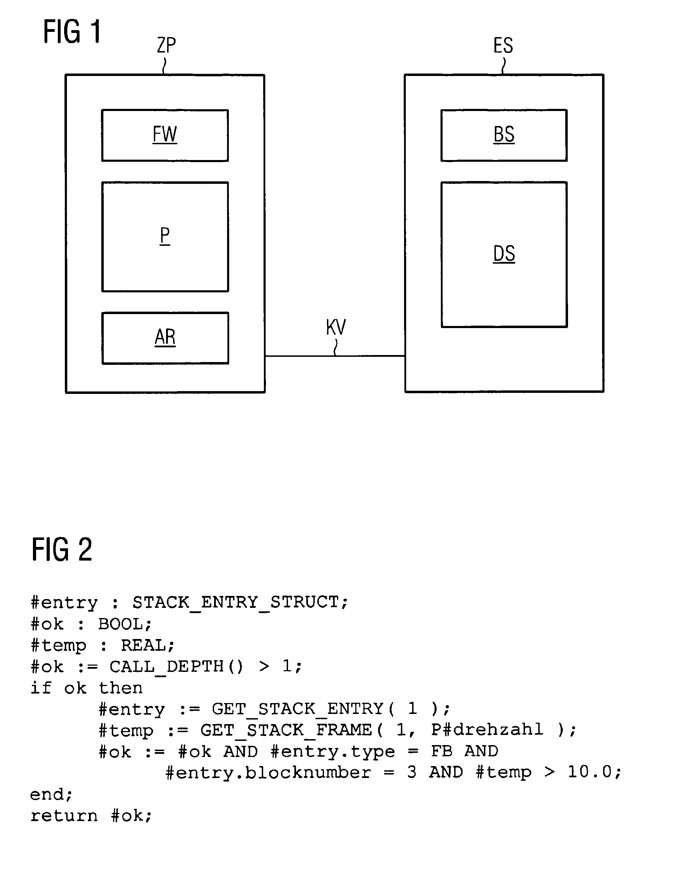

In der Figur 1 ist als Zielplattform ZP eine speicherprogrammierbare Steuerung schematisch dargestellt, welche über Kommunikationsmittel, hier: eine Kommunikationsverbindung KV, mit einem Entwicklungssystem ES verbunden ist, welches in diesem Ausführungsbeispiel die Diagnoseplattform darstellt. Das Entwicklungssystem ES ist dabei beispielsweise ein Personal-Computer, der mit einem Betriebssystem BS ausgestattet ist und der neben anderen Funktionen, beispielsweise Compiler, Editor, Linker etc., auch mit einem Diagnoseprogramm DS ("Diagnose-Software") als "Debugger" ausgestaltet ist. Auf der Zielplattform ZP, also der speicherprogrammierbaren Steuerung, ist eine Firmware FW installiert, die die Funktionalität eines Betriebssystems ausübt, aber unveränderlich in einem Festspeicher (ROM = Read-Only Memory) abgelegt ist.

Auf der Zielplattform ZP läuft ein Programm P (Anwenderprogramm) ab, welches eine automatisierungstechnische Aufgabe löst. Dazu ist das Programm P in einem Arbeitsspeicher (RAM = Random Access Memory) abgelegt, in dem auch die Variablen des Programms P abgelegt sind.

Die Entwicklungsumgebung, also im Wesentlichen die Software des Entwicklungssystems ES, umfasst eine (nicht dargestellte) zusätzliche Editier-Funktion, mit der durch das einfache Betätigen von Schaltflächen, Listboxen und dgl., kurz: GUI-Elemente (GUI = Graphical User Interface), eine Auslösebedingung für einen Überprüfungspunkt (hier: Haltepunkt) definiert werden kann. Mittels des bekannten Verfahrens des "Code-Patchings" wird an die entsprechende Stelle des Programmcodes des Programms P ein entsprechender Haltepunkt eingefügt ("injiziert"), wodurch später eine Programmausführung anhält und ein sog. Software-Interrupt ausgelöst wird. Die Editiereinrichtung übersetzt weiter die mittels der graphischen Benutzeroberfläche definierten Kriterien in eine Routine AR (Auslöse- oder Auswerte-Routine), die dann in einem MaschinenCode vorliegt und derart codiert ist, dass sie auf der Zielplattform ZP ablauffähig ist. Diese Routine AR wird mittels der Kommunikationsverbindung KV als ausführbarer Programm-block zu der Zielplattform ZP übertragen und dort im Arbeitsspeicher neben dem dort residierenden Programm P und dem dort für Variablen, Konstanten etc. allokierten Arbeitsspeicherbereich abgelegt. Die Routine AR ist dabei über den Software-Interrupt mit dem "gesetzten" Haltepunkt verknüpft, d.h., dass jedes Mal, wenn die Ausführung des Programms P den Überprüfungspunkt bzw. Haltepunkt erreicht, mittels des Software-Interrupts eine Funktion in der Firmware FW ausgeführt wird, die der Behandlung des Software-Interrupts dient. Dabei wird aus dieser Funktion der Firmware FW heraus zur Überprüfung des Vorliegens der Auslösebedingung wiederum die Routine AR aufgerufen, die als Rückgabewert einen Boole'schen Wert zurückgibt, nämlich die Information darüber, ob die Auslösebedingung erfüllt ist (wahr) oder nicht (falsch). Attraktiv kann der Software-Interrupt auch ohne "Umwege" über eine Firmware-Routine AR verzweigen.

In einer bevorzugten Ausführungsform kann für die Routine AR ein fester Speicherbereich oder ein fester Name definiert sein, so dass bei einem Austausch der Routine AR eine Anpassung des Aufrufs ("Calls") in der Firmware FW nicht durchgeführt werden muss.

Ein Haltepunkt soll nun mit der Auslösebedingung "nur wenn durch FB3 aufgerufen und die lokale Variable #drehzahl aus dem FB3 größer 10 ist" verknüpft werden. Dies wird vom Übersetzer der Entwicklungsumgebung in einen Programm-Block umgesetzt, wobei in der Figur 2 ein an die Programmiersprache Pascal angelehnter Pseudo-Code dargestellt ist und wobei der Programm-Block in einen (nicht dargestellten) Maschinencode übersetzt (compiliert) und als Routine AR zu der Zielplattform ZP übertragen wird. Dieses Codestück wird mit dem Haltepunkt-Auftrag verknüpft indem entweder die besagte Firmware-Routine darauf verweist oder aber der Software-Interrupt des Haltepunktes direkt darauf verweist, beispielsweise durch eine geeignete Interrupt-Maskierung.

Der Übersetzer (Compiler) umfasst in diesem Beispiel drei Instruktionen, die in der Firmware FW einmalig vorzuleisten sind:
CALL_DEPTH() liefert die Tiefe des Aufrufstapels ("Stacks").
GET_STACK_ENTRY ( level ) liefert einen Eintrag des Aufrufstapels. Ein Eintrag besteht im Falle einer speicherprogrammierbaren Steuerung aus Bausteintyp und Bausteinnummer des Bausteins. Im Allgemeinen besteht ein Eintrag aus etwas, das der Übersetzer verwendet, um Funktionen aufzurufen. Typischerweise ist der Eintrag im Aufrufstapel die Rücksprungadresse in die aufrufende Funktion.
GET_STACK_FRAME ( level, address ) liefert den Wert der lokalen Variablen aus der im Stack angegebenen Adresse.

Im Beispiel werden zuerst lokale Variablen für die Auslösebedingung deklariert. Dann wird überprüft, ob der Aufrufstapel genügend Einträge enthält. Hat er dies, so wird die Rücksprungadresse aus dem Stapel für den ersten Aufrufer in der lokalen Variable gelesen. Danach wird der Drehzahlwert aus der lokalen Variablen aus dem FB3 gelesen. Schließlich werden die nötigen Vergleiche durchgeführt und damit die Auslösebedingung ermittelt, d.h., dass der Boole'sche Rückgabewert ermittelt wird.

Durch die (aus dem Stand der Technik bekannte) Verknüpfung des Haltepunktes mit einem Software-Interrupt, der in einer der beschriebenen Varianten eine (unveränderliche) Firmware-Routine aufruft, mit der frei austauschbaren Routine AR kann das Vorliegen der Auslösebedingung, die letztlich gemäß dem Beispiel aus der Figur 2 in dem Programmcode der Routine AR definiert ist, vollständig und ohne zwischenzeitliche Kommunikation seitens der Zielplattform ZP ausgewertet werden. Nur dann, wenn die Auslösebedingung vorliegt bzw. erfüllt ist (Rückgabewert: "True"), wird zumindest eine Meldung über die Kommunikationsverbindung KV oder andere Kommunikationsmittel an das Entwicklungssystem ES geschickt, wo das Diagnoseprogramm DS (Debugger) in einer grundsätzlich aus dem Stand der Technik bekannten Art und Weise die weitere Verarbeitung des Haltepunktes vornimmt, also beispielsweise Variablen-Inhalte von der Zielplattform ZP abruft und dgl.. Bei negativem Rückgabewert ("False") hingegen kann die Ausführung des Programms P unverzüglich fortgesetzt werden, wodurch sich die Programm-Abarbeitung nur insoweit verzögert, als ggf. die Software-Interrupt-Service-Routine der Firmware FW und die Routine AR selbst abgearbeitet wird. Da diese Code-Bestandteile jedoch vorzugsweise in Maschinencode vorliegen, fällt für die meisten Anwendungen die daraus resultierende Verzögerung kaum ins Gewicht, wohingegen eine zwischenzeitliche Kommunikation über die Kommunikationsverbindung KV und eine entsprechende Ausnahme-Behandlung seitens des Entwicklungssystems ES sehr wohl in vielen Fällen zu einer nicht tolerablen Verzögerung führen würde.

## Patentansprüche

1. Verfahren zur Überwachung eines ablaufenden Programms (P) einer Zielplattform (ZP) durch ein Diagnoseprogramm (DS) einer Diagnoseplattform (ES),
wobei die Zielplattform (ZP) und die Diagnoseplattform (ES) über Kommunikationsmittel verknüpft sind, und
wobei ein Überwachungsauftrag von dem Diagnoseprogramm (DS) zu der Zielplattform (ZP) übermittelt wird, wobei das Programm (P) mit zumindest einem Überprüfungspunkt versehen wird,
**dadurch gekennzeichnet, dass**
- in einem ersten Schritt eine Auslösebedingung für ein durch das Diagnoseprogramm (DS) zu untersuchendes Ereignis definiert wird,
- in einem zweiten Schritt eine für die Überprüfung der Auslösebedingung ausgestaltete und auf der Zielplattform (ZP) ablauffähige Routine (AR) von der Diagnoseplattform (ES) in einen Programmspeicher der Zielplattform (ZP) übertragen wird,
- in einem dritten Schritt in den Fällen, in denen der Ablauf des zu überwachenden Programms (P) den Überprüfungspunkt erreicht, die Ausführung dieses Programms (P) unterbrochen, durch eine Verarbeitungseinheit der Zielplattform (ZP) die Routine (AR) ausgeführt und das Vorliegen der Auslösebedingung überprüft wird, wobei
- in dem Fall, in dem die Auslösebedingung nicht erfüllt ist, die Ausführung des unterbrochenen Programms (P) unmittelbar fortgesetzt wird, und
- in dem Fall, in dem die Auslösebedingung erfüllt ist, zumindest eine Meldung zu dem Diagnoseprogramm (DS) übertragen wird.

2. Verfahren nach Patentanspruch 1,
**dadurch gekennzeichnet,**
**dass** die Zielplattform (ZP) eine speicherprogrammierbare Steuerung einer industriellen Automatisierungsanordnung ist.

3. Verfahren nach Patentanspruch 2,
**dadurch gekennzeichnet,**
**dass** als das Diagnoseprogramm (DS) ein Entwicklungssystem (ES) für speicherprogrammierbare Steuerungen verwendet wird.

4. Verfahren nach einem der vorhergehenden Patentansprüche,
**dadurch gekennzeichnet,**
**dass** Parameter und/oder Eigenschaften der Auslösebedingung mit einem graphischen Editor definiert und durch einen Programmgenerator in die ablauffähige Routine (AR) umgesetzt werden.

5. Verfahren nach einem der vorhergehenden Patentansprüche,
**dadurch gekennzeichnet,**
**dass** die Routine (AR) getrennt von dem Programm (P) und nach dem Laden oder Installieren des Programms (P) auf die Zielplattform (ZP) übertragbar ist.

6. Verfahren nach einem der vorhergehenden Patentansprüche,
**dadurch gekennzeichnet,**
**dass** als der Überprüfungspunkt ein Haltepunkt verwendet wird, wobei an dem Haltepunkt der Ablauf des Programms (P) unterbrochen und die Routine (AR) aufgerufen wird.

7. Verfahren nach einem der vorhergehenden Patentansprüche,
**dadurch gekennzeichnet,**
**dass** die Routine (AR) Aufrufe von Funktionen und Methoden einer Firmware (FW) und/oder eines Betriebssystems (BS) der Zielplattform (ZP) umfasst.

8. Verfahren nach Patentanspruch 7,
**dadurch gekennzeichnet,**
**dass** die Firmware (FW) oder das Betriebssystem (BS) Methoden für den lesenden Zugriff auf einen Programmstapel der Zielplattform (ZP) aufweist.

9. Verfahren nach einem der vorhergehenden Patentansprüche,
**dadurch gekennzeichnet,**
**dass** das Diagnoseprogramm (DS) als Anwendung in einem Browser der Diagnoseplattform (ES) abläuft, wobei die Zielplattform (ZP) einen Web-Server zur Kommunikation zwischen der Routine (AR) und dem Diagnoseprogramm (DS) aufweist.

10. Entwicklungsumgebung für die Erstellung und die Überwachung eines Programms (P) für eine Zielplattform (ZP), wobei die Entwicklungsumgebung auf einer über Kommunikationsmittel mit der Zielplattform (ZP) verbundenen getrennten Diagnoseplattform (ES) installiert ist,
wobei ein Diagnoseprogramm (DS) der Entwicklungsumgebung zur Erstellung eines Überwachungsauftrages eingerichtet ist, und
wobei das Programm (P) der Zielplattform (ZP) mit zumindest einem Überprüfungspunkt versehbar ist,
**dadurch gekennzeichnet, dass**
die Entwicklungsumgebung zur Erstellung einer Routine (AR) für die Überprüfung des Vorliegens einer Auslösebedingung und für die Übertragung dieser Routine (AR) zu der Zielplattform (ZP) eingerichtet ist,
dass die Entwicklungsumgebung zur Verknüpfung des zumindest einen Überprüfungspunktes mit der Routine (AR) seitens der Zielplattform (ZP) eingerichtet ist,
dass die Routine (AR) unabhängig von dem Programm (P) erstellbar und zu der Zielplattform (ZP) übertragbar ist, und
dass die Routine (AR) derart ausgestaltet ist, dass eine Übertragung von Kontrollinformationen von der Zielplattform (ZP) zu der Entwicklungsumgebung nur in den Fällen erfolgt, in denen eine durch die Routine (AR) definierte Auslösebedingung erfüllt ist.
